# EUROPÄISCHE PATENTSCHRIFT

(11) **EP 0 972 636 B1**
(45) Veröffentlichungstag und Bekanntmachung des Hinweises auf die Patenterteilung: **06.10.2004**
(21) Anmeldenummer: 99113372.9
(22) Anmeldetag: 10.07.1999
(51) Int. Cl.: B32B 31/20, B30B 7/02

(54) **Mehretagenpresse für laminierte Plastikkarten**
Multi-plate press for laminated plastic cards
Presse à plateaux multiples pour cartes stratifiées en matière plastique

(30) Priorität: 13.07.1998 DE 19831377
(43) Veröffentlichungstag der Anmeldung: 19.01.2000
(73) Patentinhaber: Robert Bürkle GmbH, 72250 Freudenstadt (DE)
(72) Erfinder: Stein, Wolfgang, 72250 Freudenstadt (DE)
(74) Vertreter: Brommer, Hans Joachim, Dr.-Ing.

(56) Entgegenhaltungen:
- US-A- 3 468 243
- US-A- 4 392 909
- US-A- 4 963 221
- PATENT ABSTRACTS OF JAPAN vol. 009, no. 132 (M-385), 7. Juni 1985 (1985-06-07) & JP 60 015095 A (MEIKI SEISAKUSHO:KK), 25. Januar 1985 (1985-01-25)

## Beschreibung

Die Erfindung betrifft eine Mehretagenpresse zur Herstellung laminierter Plastikkarten wie Scheckkarten, Kreditkarten und der gleichen, insbesondere kontaktloser Karten mit integrierten elektronischen Bauteilen, wobei mehrere zu verpressende Folienstapel auf übereinander angeordneten, vertikal zusammenfahrbaren Etagen der Presse liegen, jede Etage eine Heizung umfasst und der Pressvorgang durch Anheben der Etagen mittels eines Presstisches erfolgt, bis die Etagen unter Druck aneinander liegen, wobei oberhalb der obersten Etage eine Heizplatte angeordnet ist, die vertikal verfahrbar gelagert ist und als verschiebbarer Anschlag für die Hubbewegung der Presse fungiert.

Bei herkömmlichen laminierten Plastikkarten wie Scheckkarten, Kreditkarten, Telefonkarten, die aus mehreren unter Hitzeeinwirkung miteinander verpressten Laminaten bestehen, sind die elektronischen Bauteile wie Datenträger, Magnetstreifen oder Chip in den Außenflächen der Karte platziert. Demgegenüber sind sie bei den so genannten Kontaktloskarten und ähnlichen Karten nicht mehr freiliegend angeordnet, sondern im Inneren der Karte integriert. Das Einlesen oder Auslesen von Daten oder allgemein die Signalübertragung erfolgt dabei kontaktlos auf induktivem Weg. Dazu hat das elektronische Bauteil meist eine Antenne, die ebenfälls verdeckt innerhalb der Karte verläuft.

Bei beiden Kartentypen müssen die elektronischen Bauteile so eingebettet bzw. eingepresst werden, dass einerseits ein Gesamtverbund des Laminats entsteht, andererseits eine Beschädigung der elektronischen Bauteile beim Einpressvorgang ausgeschlossen ist.

Um eine Materialverdrängung der inneren Lagen durch das elektronische Bauteil, insbesondere den Chip und dessen Träger, zu vermeiden, werden in den inneren Lagen passende Öffnungen bzw. Aussparungen vorgesehen, in die die elektronischen Bauteile hineinpassen.

Eine Presse mit den Merkmalen des Oberbegriffes von Patentanspruch 1 ist durch die US 4 963 221 bekannt geworden. Des weiteren ist durch die US 3 468 243 eine Mehretagenpresse bekannt, bei der der untere Presstisch über ein Hebelgestänge mit sämtlichen Etagen verbunden ist, sodass alle Etagen gleichzeitig, aber mit unterschiedlicher Geschwindigkeit angehoben werden und gleichzeitig in ihrer oberen Position ankommen, wo sie unter Druck aneinander liegen. Dabei sind in das Hebelgestänge bei jeder Etage hydraulische Ausgleichsvorrichtungen eingebaut, die einen Dickenausgleich für unterschiedlich hohe Folienstapel gestatten. Eine ähnliche Presse ist auch durch Patent Abstracts of Japan vol. 009,no. 132 (M385) und JP 60015095 bekannt geworden.

Untersuchungen der Anmelderin haben ergeben, dass Toleranzen in den elektronischen Bauteilen einerseits und den Plastikfolien andererseits ursächlich dafür sind, dass entweder die genannten Öffnungen nicht vollständig durch die elektronischen Bauteile ausgefüllt werden oder dass die elektronischen Bauteile überstehen und somit eine Materialverdrängung bzw. Materialverdichtung zur Folge haben. Dabei entstehen durch nicht ausgefüllte Öffnungen lokale Einsenkungen an der Laminatoberfläche, wogegen sich Materialverdrängungen durch leichte Erhöhungen an der Oberfläche abzeichnen.

Hiervon ausgehend liegt der vorliegenden Erfindung die Aufgabe zugrunde, die vorgenannten Probleme zu beseitigen, insbesondere also eine Mehretagenpresse anzugeben, mit der sich absolut plane Kartenoberflächen auch dann erzielen lassen, wenn die vorerwähnten Toleranzen in den Bauteilen und Plastikfolien auftreten, überschritten werden oder sich gegenseitig negativ verstärken. Im Ergebnis sollen also Plastikkarten erzeugt werden können, die sich durch einen absolut ebenen, fehlerfreien Dekordruck auszeichnen.

Diese Aufgabe wird erfindungsgemäß durch die Merkmale der Patentansprüche 1 und 6 gelöst.

Da alle Etagen - außer der auf dem Preßtisch liegenden Etage-jeweils an ein eigenes Hubelement angeschlossen sind und jedes dieser Hubelemente über eine eigene Regeleinheit an eine gemeinsame Druckmittelquelle angeschlossen ist, läßt sich für jede Etage individuell die Hubkraft einstellen, und zwar entweder mit fester Voreinstellung oder in Abhängigkeit des individuell erfaßten Gewichtes jeder Etage. Dadurch ist für jede Etage der gewünschte Anpreßdruck realisierbar.

Vorzugsweise wirkt die Heizplatte mit einem Druck- oder Wegsensor zusammen, so daß in der Aufheizphase wie auch nach Erreichen des thermoplastischen Zustandes der Folienstapel eine exakte Steuerung des Preßvorganges gewährleistet ist. Man kann auf diese Weise die Presse zunächst nur soweit hochfahren, bis alle Etagen mit den darauf liegenden Folienstapeln in Kontakt miteinander sind und die oberste unbelegte Heizplatte, die als beweglicher Anschlag fungiert, nur soweit angehoben wird, daß der Druck- oder Wegsensor anspricht. In diesem Stadium, das vergleichsweise annähernd drucklos ist, werden die Folienstapel bis zum Erreichen des thermoplastischen Zustandes erwärmt und erst danach erfolgt der eigentliche Preßvorgang, und zwar mit einem derart geringen Druckgradient, daß das Kunststoffmaterial Hohlräume in der Umgebung des elektronischen Bauteiles ausfüllen und bei Überständen des elektronischen Bauteiles wegfließen kann, ohne kritische Reaktionskräfte auf das elektronische Bauteil auszuüben.

Um ein besonders feinfühliges Zusammenfahren der Etagen bis zur Anlage an der obersten Heizplatte sicherzustellen, empfiehlt es sich, sie ebenfalls an ein Hubelement anzuschließen, das einen gewissen Gewichtsausgleich für die obere Heizplatte herbeiführt. Die Heizplatte wirkt somit nicht mit ihrem gesamten Eigengewicht auf den darunter befindlichen Folienstapel sondern nur mit einer deutlich geringeren Kraft, deren Stärke über das Hubelement gesteuert werden kann. Dieses Hubelement kann ebenso wie die Hubelemente für die Etagen motorisch, hydraulisch, mechanisch, vorzugsweise aber pneumatisch betätigt werden und beispielsweise über eine Reglereinheit an eine Druckmittelquelle angeschlossen sein.

Aus Kostengründen empfiehlt es sich, die Heizplatte ähnlich auszubilden wie in den darunter liegenden Etagen. Dies gilt auch hinsichtlich ihres zugeordneten Hubelementes zur Herbeiführung eines individuellen Gewichtsausgleiches.

Zu dem Gewichtsausgleich ist generell anzumerken, daß damit nicht nur das Gewicht der Tischplatten bzw. Heizplatten, sondern-auch das der darauf liegenden Folienstapel mehr oder weniger ausgeglichen werden soll. Die genannten Hubelemente haben dazu jeweils eine eigene Reglereinheit.

Trotz des beschriebenen Gewichtsausgleiches kann es beim Hochfahren des Preßtisches zu unerwünschten Belastungsspitzen an den Folienstapeln kommen, und zwar jeweils dann, wenn ein nach oben fahrender Folienstapel gegen die nächsthöhere, noch in Ruhe befindliche Etage stößt, weil diese Etage dann von der Geschwindigkeit 0 auf die Hubgeschwindigkeit beschleunigt werden muß. Damit die hierbei zu überwindenden Trägheitskräfte verringert werden, liegt es im Rahmen der Erfindung, alle Etagen mit einem individuellen, eigenen Hubantrieb zu -verbinden, der die nächsthöhere Etage schon dann nach oben anhebt, bevor die von unten ankommende Etage aufprallt. Dadurch sind die Etagen beim Zusammenfahren nicht mehr der vollen Geschwindigkeitsdifferenz ausgesetzt. Dieser zusätzliche individuelle Antrieb kann so ausgelegt werden, daß alle Etagen gleichzeitig hochfahren, wobei die Geschwindigkeit der unteren Etagen höher sein muß als die der oberen Etagen, damit alle Etagen etwa gleichzeitig ihre obere Endposition erreichen.

Dieser gleichzeitige Antrieb aller Etagen mit abgestufter Geschwindigkeit kann beispielsweise über umlaufende Zugmittel wie Ketten oder dergleichen erfolgen deren Antriebsräder unterschiedliche Durchmesser aufweisen. Dadurch können alle Antriebsräder auf derselben Welle angeordnet sein, aber aufgrund ihres unterschiedlichen Durchmessers erzeugen sie unterschiedliche Umlaufgeschwindigkeiten an ihrem jeweiligen Zugmittel.

Statt dessen kann der Antrieb aber auch über die bereits erwähnten Hubelemente erfolgen, derart, daß diese nicht nur einen statischen Gewichtsausgleich herbeiführen, sondern gesteuert über ihre Regeleinheiten eine echte Hubbewegung an jeder Etage auslösen, bevor die von unten ankommende Nachbaretage anstößt. Nach dem Anstoßen kann die Funktion des Hubelementes wieder auf den Gewichtsausgleich reduziert werden.

Weitere Merkmale und Vorteile der Erfindung ergeben sich aus den übrigen Ansprüchen und der nachfolgenden Beschreibung eines Ausführungsbeispieles anhand der Zeichnung; dabei zeigt
- Figur 1: einen Querschnitt durch eine Kontaktloskarte mit Antenne und integriertem Chip in ungepreßtem Zustand;
- Figur 2: den gleichen Querschnitt in verpreßtem Zustand;
- Figur 3: die Draufsicht auf eine mit Laminatbogen belegte Transportplatte;
- Figur 4: einen Querschnitt durch ein Mehrschichtpreßpaket;
- Figur 5: eine schematische Ansicht der Presse mit hydraulischem Schließmechnismus;
- Figur 6: eine Ansicht der Presse mit dem Gewichtsausgleich und
- Figur 7: Ablaufdiagramme des Preßvorganges.

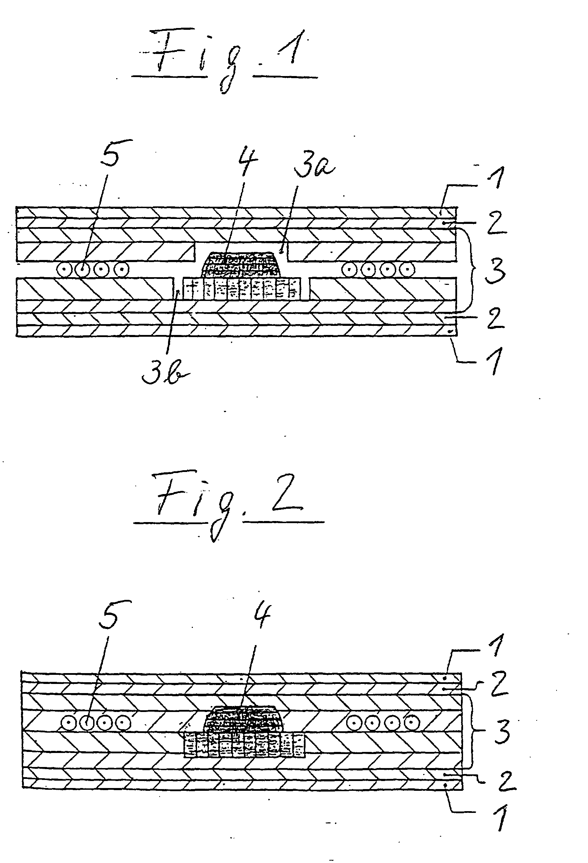

Gemäß den Figuren 1 und 2 bestehen die Kontaktloskarten aus einer oberen und unteren Deckfolie 1, an die sich jeweils nach innen eine Dekorfolie oder Weißfolie 2 anschließt, während zwischen den Dekor- oder Weißfolien 2 mehrere Innenfolien 3 verlaufen. Diese Innenfolien sind lokal mit Ausnehmungen 3a bzw. 3b versehen, um darin das elektronische Bauteil 4, insbesondere ein Chipmodul mit seinem Modulträger unterzubringen. Im allgemeinen ist an das elektronische Bauteil 4 eine Antenne 5 angebondet. Sie kann ebenfalls in einer passenden Aussparung einer Innenfolie 3 verlegt sein, meist wird sie jedoch einfach auf der Oberseite einer Folie platziert.

Figur 2 zeigt die gleiche Kontaktloskarte im gepreßten Zustand. Dabei sind die zuvor vorhandenen Hohlräume zwischen dem elektronischen Bauteil und den angrenzenden Plastikfolien praktisch vollständig eliminiert und das elektronische Bauteil mit seiner Antenne und gegebenenfalls sonstigem Zubehör ist allseits von den Plastikfolien umschlossen. Gleichzeitig sind die Folien durch den Preßvorgang auch untereinander fest verbunden. Dabei wird angestrebt, daß die im Bereich des elektronischen Bauteiles stattfindende Materialverdrängung und Materialverdichtung sich gar nicht oder nur minimal in den Dekorfolien 2 abzeichnet. Daher werden teilweise für die Innenfolien 3 besonders weiche Folien mit niedrigem Schmelzpunkt und/oder geringer Dichte eingesetzt.

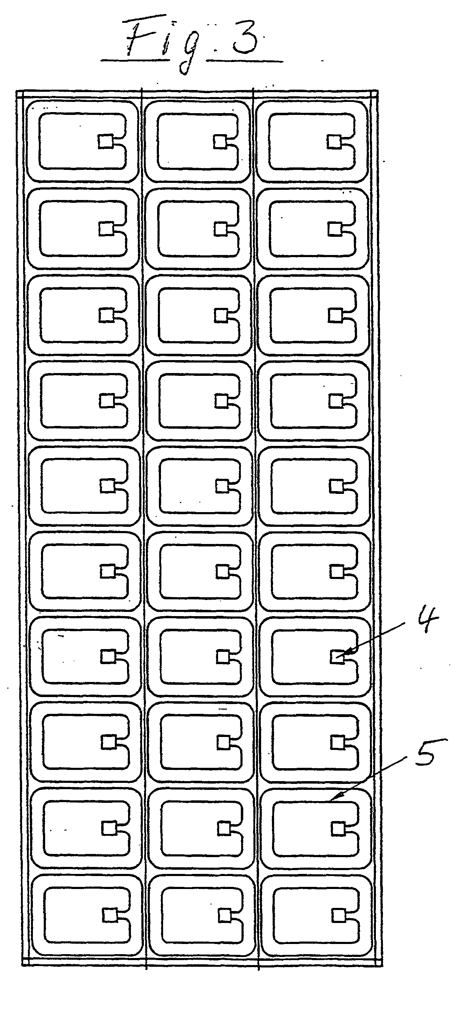

In Figur 3 erkennt man, daß ein Laminatbogen zahlreiche nebeneinander angeordnete zusammenhängende Einzelkartenformate erhält, wobei sich die Anzahl der Karten vor allem danach richtet, wie der Dekordruck aufgebracht wird und wie die Vorproduktion zur Platzierung der elektronischen Bauteile erfolgt. Im Ausführungsbeispiel gemäß Figur 3 sind also in einem Laminatstapel drei Reihen mit jeweils 10 Einzelkartenformaten untergebracht, wobei es für die Realisierung der Erfindung keine Rolle spielt, ob die Karten schon vor dem Preßvorgang vereinzelt sind oder erst dann ausgestanzt werden.

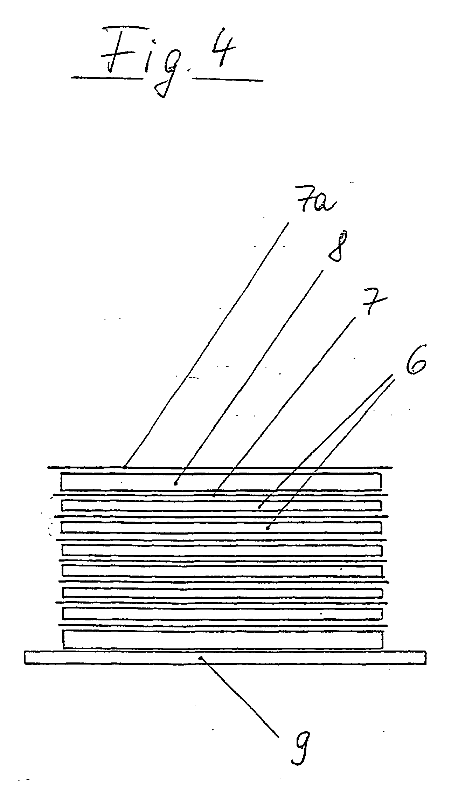

Aus Figur 4 erkennt man, daß mehrere der in Figur 1 oder 2 gezeigten Folienstapel in der gleichen Etage einer Presse übereinander gestapelt sein können, um die Kartenausbeute pro Etage zu erhöhen. Die Folienstapel 6 sind in diesem Fall jeweils durch Preßbleche 7 voneinander separiert, damit sie beim Preßvorgang nicht zusammenkleben. Zwischen dem obersten Preßblech 7 und der Deckplatte 7a wird meist noch ein Preßpolster 8 zur gleichmäßigeren Druck- und Temperaturverteilung angeordnet.

Ein derartiges Preßpaket wird auf einer Transportplatte 9 arrangiert, die die Handhabung und den Transport des Preßpaketes erleichtert. Im allgemeinen werden die einzelnen Etagen der Presse jeweils mit einem derartigen Preßpaket belegt, so daß mit einem einzigen Preßvorgang eine Vielzahl von Karten hergestellt werden können.

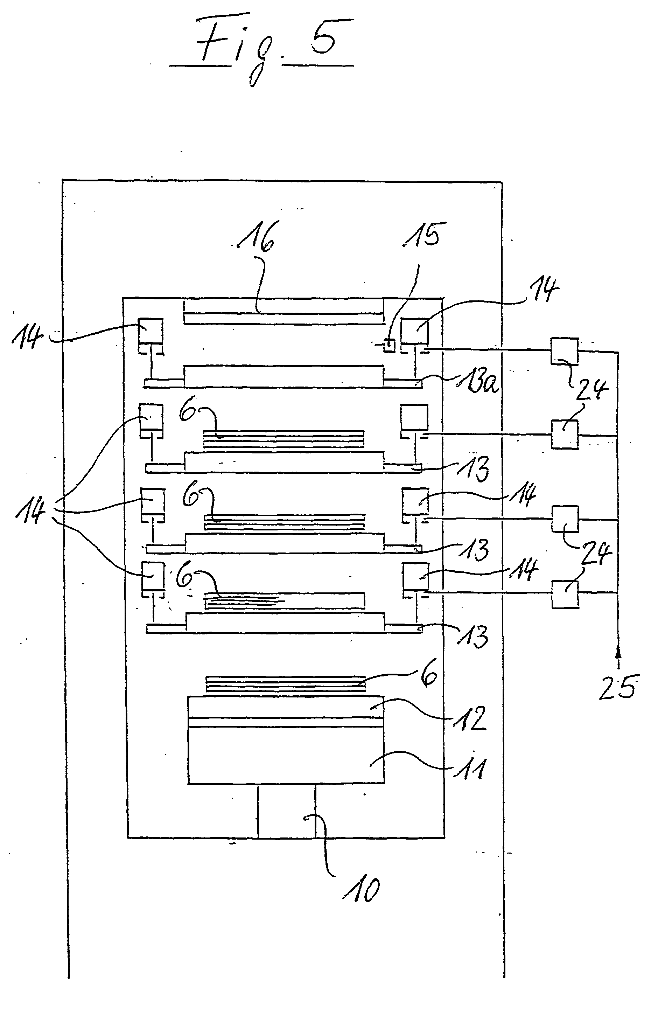

Die Presse selbst ist in Figur 5 dargestellt. Sie besteht aus einem unteren Preßkolben 10, der einen Preßtisch 11 mit einer beheizbaren Tischplatte 12 trägt. Auf dieser Tischplatte 12 liegt der erste Folienstapel 6.

Im Abstand oberhalb der Tischplatte sind mehrere vertikal verfahrbare Etagen 13 angeordnet, die jeweils eine beheizbare Tischplatte aufweisen und die in ihrer gezeichneten abgesenkten Position jeweils etwa genauso weit von einander distanziert sind, wie die untere Etage 13 von der Tischplatte 12. Jede dieser Etagen 13 trägt ein Preßpaket 6 gemäß Figur 4.

Mit Abstand oberhalb der obersten Etage 13 ist eine vertikal verfahrbare Heizplatte 13a angeordnet, die zwar ähnlich wie die beschriebenen Etagen aussieht, aber nicht zur Aufnahme eines Preßpaketes bestimmt ist, sondern als verfahrbarer Anschlag während des Preßvorganges dient. Mit Abstand darüber befindet sich das starre Pressenoberteil 16.

Der eigentliche Preßvorgang erfolgt durch Hochfahren des Preßkolbens 10. Bei dieser Hubbewegung fährt der auf der Tischplatte 12 befindliche Folienstapel zunächst an die unterste Etage 13, nimmt diese nach oben mit bis zum Ankommen an der nächsten Etage, so daß im Laufe der weiteren Hubbewegung schließlich eine Etage nach der anderen angehoben wird. Wesentlich bei diesem Vorgang ist, daß alle Etagen 13 mit einem Gewichtsausgleich 14 verbunden sind, der hier jedoch nur schematisch dargestellt ist. Er stellt sicher, daß die Belastung der Folienstapel nicht von der Anzahl der über ihnen befindlichen Etagen abhängig ist, sondern für alle Etagen möglichst gleich gering ist und in der Größenordnung von etwa 10 kg bis 30 kg liegt. In der Praxis wird dieser Gewichtsausgleich durch vorzugsweise pneumatisch wirkende Hubelemente realisiert, die über individuell zugeordnete Reglereinheiten 24 von einer gemeinsamen Druckmittelquelle 25 gespeist werden und eine nicht ganz dem jeweiligen Etagengewicht entsprechende Gegenkraft nach oben erzeugen. Dies hat zur Folge, daß beim Hochfahren der Etagen lediglich eine sichere Anlage der Preßpakete an den Heizplatten der darüber befindlichen Etagen 13 bzw. an der obersten Heizplatte 13a und somit eine gute Wärmeübertragung erzeugt wird.

Außerdem können die Hubelemente aber auch dazu benutzt werden, den Stoß zu dämpfen, der jeweils durch das Anprallen der hochfahrenden unteren Etage bzw. Etagen gegen die darüber befindliche Etage stattfindet. Dazu werden die Hubelemente nacheinander von unten nach oben entsprechend dem Fortgang der Hubbewegung des Preßkolbens 10 so angesteuert, daß jede Etage kurz vor dem Aufprallen der unteren Etage(n) nach oben verfahren wird, bis sie annähernd die Geschwindigkeit der von unten kommenden Etage(n) hat. Wenn die von unten kommende(n) Etage(n) die darüber angeordnete Etage erreicht hat bzw. erreicht haben, wird die Funktion des genannten oberen Hubelementes wieder auf den Gewichtsausgleich reduziert. Es ist dabei nicht notwendig, zu einer totalen Geschwindigkeitsangleichung vor dem Zusammenfahren der Etagen zu kommen, hilfreich ist auch bereits eine deutliche Verringerung der Geschwindigkeitsdifferenz.

Je nach dem Gewicht der Heizplatte 13a kann auch diese mit einem Gewichtsausgleich 14 versehen sein, was aber nicht zwingend notwendig ist, da sich ihr Gewicht gleichmäßig auf alle darunter befindlichen Preßpakete verteilt. Vielmehr besteht die Hauptaufgabe der oberen Heizplatte 13a in ihrer Funktion als verschiebbarer Anschlag, sie kann nämlich einige Millimeter bis Zentimeter nach oben verfahren werden, ohne daß sich dadurch die Druckbelastung der Pressenstapel nennenswert ändert. Dadurch ist man in der Lage, den Preßkolben 10 zum Schließen aller Etagen hochzufahren, ohne dabei einen unkalkulierbaren Druckanstieg in den Folienstapeln zu erzeugen.

Damit die Hubbewegung des Preßkolbens 10 bei Erreichen der oberen Heizplatte 13a beendet wird, wirkt die Heizplatte 13a mit einem Wegsensor 15 zusammen. Er zeigt an, sobald der obere Pressenstapel die Heizplatte 13a aus ihrer abgesenkten Position heraus anhebt, und unterbricht die weitere Hubbewegung. In dieser Stellung der Presse werden die Folienstapel 6 durch die unten und oben anliegenden Heizplatten nahezu drucklos erwärmt, bis die innenliegenden Plastikfolien 3, die das elektronische Bauteil 4 umfließen sollen, etwa den thermoplastischen Zustand erreicht haben. Dies kann durch Zeit- oder Temperaturmessung überwacht werden.

Anschließend erfolgt die eigentliche Verpressung durch weiteres Hochfahren des Preßkolbens 10, so daß das Pressenoberteil 16 als Festanschlag wirksam wird. Dieses Hochfahren erfolgt jedoch im Gegensatz zum Stand der Technik nicht mit gleichbleibend steilem Druckanstieg, sondern mit einem verzögerten flachen Druckanstieg. Dieser Druckanstieg wird über die Anlagensteuerung geregelt, wozu auch der Wegsensor 15 herangezogen werden kann.

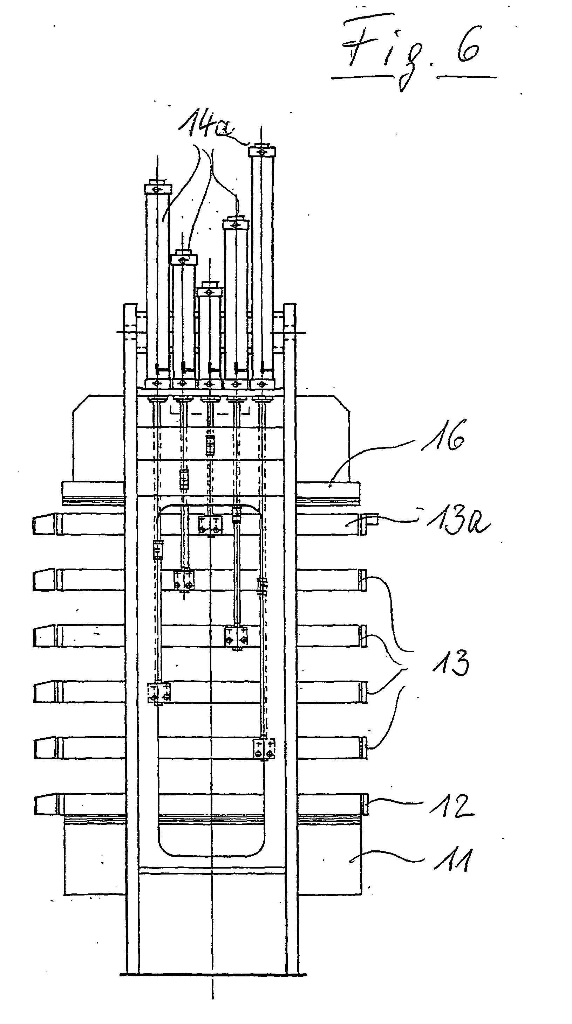

Figur 6 zeigt den zuvor nur schematisch gezeigten Gewichtsausgleich in Form einzelner Zylinder-Kolbenaggregate 14a. Diese Zylinderkolbenaggregate sind unterschiedlich lang, weil die unteren Etagen 13 viel größere Hubbewegungen durchführen müssen als die oberen Etagen.

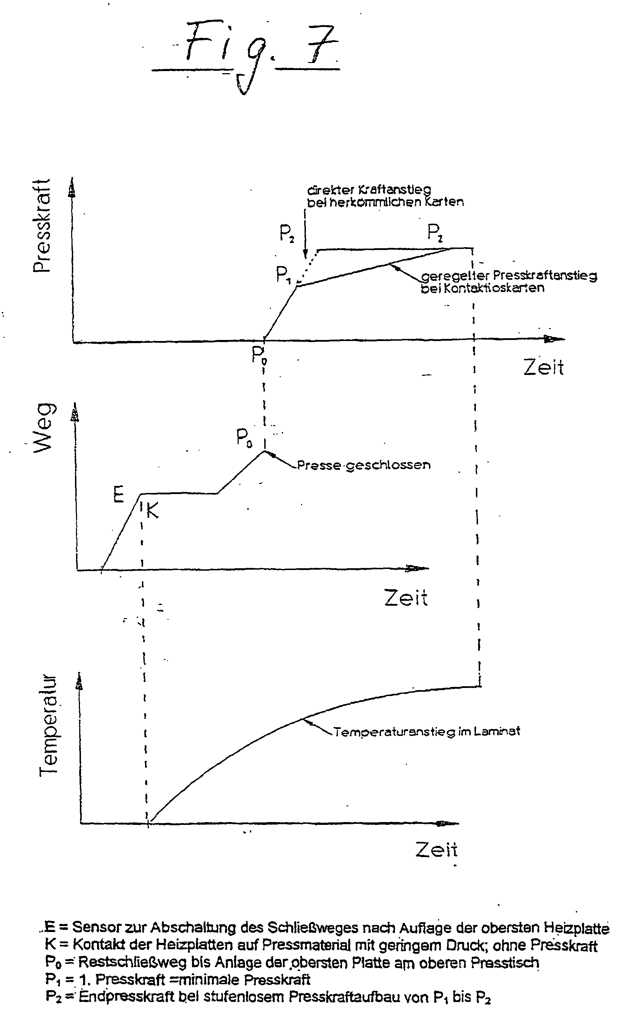

Weitere Einzelheiten des Preßvorganges ergeben sich aus den Ablaufdiagrammen in Figur 7.

In dem mittleren Diagramm ist die Hubbewegung des Preßkolbens 10 über der Zeit aufgetragen. Man erkennt, daß der Preßkolben zunächst bis zum gegenseitigen Kontakt der einzelnen Etagen hochfährt, nämlich bis zum Punkt K. Dann wird durch die oberste Heizplatte 13a der Sensor 15 betätigt und die weitere Hubbewegung unterbrochen, damit die Kunststoffolien Zeit haben sich an den vorgeheizten Platten zu erwärmen. Folgerichtig erkennt man im darunterliegenden Temperatur/Zeitdiagramm den Beginn des Temperaturanstieges im Laminat.

Nach einer gewissen Aufheizzeit haben die Plastikfolien zumindest der Innenlagen 3 dann den thermoplastischen Zustand erreicht. Die Presse wird dann geschlossen und der Preßkolben 10 fährt weiter nach oben, bis die obere Heizplatte 13a am Pressenoberteil 16 anliegt und der Punkt P⁰ erreicht ist.

Sodann beginnt der eigentliche Preßvorgang, wozu auf das obere Diagramm verwiesen wird. Man erkennt, daß die Preßkraft zunächst steil auf einen Wert P₁ ansteigt, danach jedoch abknickt und mit deutlich geringerem Druckgradient bis zum Enddruck P₂ weitersteigt. Durch diesen geregelten Preßkraftanstieg ist sichergestellt, daß die elektronischen Bauteile beim Verpressen keinen Schaden nehmen können.

Es liegt im Rahmen der Erfindung, die Presse in reduziertem Umgebungsdruck zu betreiben, damit Lufteinschlüsse zwischen den Folien eliminiert werden.

## Patentansprüche

1. Mehretagenpresse zur Herstellung laminierter Plastikkarten wie Scheckkarten, Kreditkarten und dergleichen, insbesondere kontaktloser Karten mit integrierten elektronischen Bauteilen (4, 5), wobei mehrere zu verpressende Folienstapel (6) auf übereinander angeordneten vertikal zusammenfahrbaren Etagen (13) der Presse liegen, jede Etage (13) eine Heizung umfasst und der Pressvorgang durch Anheben der Etagen (13) mittels eines Presstisches (11, 12) erfolgt, bis die Etagen unter Druck aneinander liegen, wobei oberhalb der obersten Etage (13) eine Heizplatte (13a) angeordnet ist, die vertikal verfahrbar gelagert ist und als verschiebbarer Anschlag für die Hubbewegung der Presse fungiert,
**dadurch gekennzeichnet,**
**dass** die oberhalb des Presstisches (11, 12) liegenden Etagen (13) jeweils mit einem gewissen Gewichtsausgleich (14, 14a) versehen sind, indem sie an ein eigenes Hubelement (14, 14a) zur Herbeiführung eines individuellen Gewichtsausgleiches angeschlossen sind und dass die genannten Hubelemente (14, 14a) jeweils über eigene Regeleinheiten (24) an eine Druckmittelquelle (25) angeschlossen sind, derart, dass die an die unteren Etagen (13) angeschlossenen Hubelemente (14, 14a) größere Hubbewegungen durchführen als die an die oberen Etagen angeschlossenen Hubelemente (14, 14a).

2. Mehretagenpresse nach Anspruch 1,
**dadurch gekennzeichnet,**
**dass** die Heizplatte (13) mit einem Druck- oder Wegsensor (15) zur Steuerung des Pressvorganges zusammenwirkt.

3. Mehretagenpresse nach Anspruch 1,
**dadurch gekennzeichnet,**
**dass** die Heizplatte (13) an ein Hubelement (14, 14a) zur Herbeiführung eines gewissen Gewichtsausgleiches angeschlossen ist.

4. Mehretagenpresse nach Anspruch 3,
**dadurch gekennzeichnet,**
**dass** das Hubelement (14, 14a) über eine Regeleinheit (24) an eine Druckmittelquelle (25) angeschlossen ist.

5. Mehretagenpresse nach Anspruch 1,
**dadurch gekennzeichnet,**
**dass** die Heizplatte (13) im Wesentlichen den gleichen Aufbau wie die darunter liegenden Etagen (13) aufweist.

6. Verfahren zur Verpressung laminierter Plastikkarten wie Scheckkarten, Kreditkarten und dergleichen, insbesondere kontaktloser Karten mit integrierten elektronischen Bauteilen, wobei mehrere zu verpressende Folienstapel auf übereinander angeordnete, vertikal zusammenfahrbare Etagen (13) einer Presse gelegt werden, jede Etage beheizt wird und der Pressvorgang durch Anheben der Etagen mittels eines Preßtischer (11, 12) erfolgt, bis sie unter Druck aneinander liegen, wobei der Pressvorgang mehrstufig erfolgt und die Kunststofffolien zunächst nahezu ohne Presskraft bis zum Erreichen eines thermoplastischen Zustandes erhitzt werden und erst danach der Druck bis zum Maximaldruck gesteigert wird,
**dadurch gekennzeichnet,**
**dass** die oberhalb des Preßtisches (11, 12) liegenden Etagen (13) jeweils mit einem gewissen Gewichtsausgleich versehen sind und der Gewichtsausgleich durch individuelle Hubelemente (14, 14a) erfolgt, die an den unteren Etagen größere Hubbewegungen durchführen als an den oberen Etagen.

7. Verfahren nach Anspruch 6,
**dadurch gekennzeichnet,**
**dass** der Pressdruck zunächst mit einem geringen, danach mit einem höheren Druckgradient zunimmt.

8. Verfahren nach Anspruch 6,
**dadurch gekennzeichnet,**
**daß** der Druckanstieg nach Erreichen des thermoplastischen Zustandes bei geschlossener Presse über einen Regler gesteuert wird.

9. Verfahren nach Anspruch 6,
**dadurch gekennzeichnet,**
**daß** die Etagen (13) jeweils an ein eigenes Hubelement (14) angeschlossen sind und dieses Hubelement (14) seine Etage (13) hochhebt, bevor die von unten kommenden Etagen anstoßen, so daß der Stoß gedämpft wird.

## Claims

1. Multi-plate press for the production of laminated plastic cards such as cheque cards, credit cards and the like, in particular contactless cards with integrated electronic components (4, 5), wherein a plurality of film stacks (6) to be pressed lie on plates (13) of the press which are disposed above one another and can be driven together vertically, wherein each plate (13) includes a heating unit and the pressing operation is carried out by lifting the plates (13) by means of a press table (11, 12) until the plates rest against one other under pressure, and wherein above the uppermost plate (13) there is disposed a heating plate (13a) which is mounted so as to be vertically displaceable and functions as a movable stop for the lifting movement of the press, **characterised in that** the plates (13) lying above the press table (11, 12) are each provided with a specific weight equalisation (14, 14a), are connected to their own lifting element (14, 14a) in order to bring about an individual weight equalisation, and that the said lifting elements (14, 14a) are each connected by way of their own control units (24) to a pressure medium source (25) in such a way that the lifting elements (14, 14a) connected to the lower plates (13) carry out greater lifting movements than the lifting elements (14, 14a) connected to the upper plates.

2. Multi-plate press as claimed in Claim 1, **characterised in that** the heating plate (13) co-operates with a pressure sensor or path sensor (15) in order to control the pressing operation.

3. Multi-plate press as claimed in Claim 1, **characterised in that** the heating plate (13) is connected to a lifting element (14) in order to bring about a specific weight equalisation.

4. Multi-plate press as claimed in Claim 3, **characterised in that** the lifting element (14, 14a) is connected by way of a control unit (24) to a pressure medium source (25).

5. Multi-plate press as claimed in Claim 1, **characterised in that** the heating plate (13) has substantially the same construction as the plates (13) lying below it.

6. Method of pressing laminated plastic cards such as cheque cards, credit cards and the like, in particular contactless cards with integrated electronic components, wherein a plurality of film stacks (6) to be pressed lie on plates (13) of the press which are disposed above one another and can be driven together vertically, each plate (13) includes a heating unit and the pressing operation is carried out by lifting the plates (13) by means of a press table (11, 12) until they rest against one other under pressure, wherein the pressing operation takes place in multiple stages and the plastics films are first of all heated almost without pressing force until a thermoplastic state is reached, and only thereafter is the pressure increased up to the maximum pressure.

7. Method as claimed in Claim 6, **characterised in that** the pressing pressure at first increases with a small pressure gradient and thereafter with a higher pressure gradient.

8. Method as claimed in Claim 6, **characterised in that** the pressure increase is controlled by way of a controller after the thermoplastic state is reached with the press closed.

9. Method as claimed in Claim 6, **characterised in that** the plates (13) are each connected to their own lifting element (14) and this lifting element (14) lifts its plate (13) before the plates coming from below strike, so that the impact is damped.

## Revendications

1. Presse à plateaux ou à étages multiples pour la fabrication de cartes stratifiées en matière plastique telles que cartes bancaires, cartes de crédit et analogues, en particulier de cartes sans contact avec des composants électroniques (4, 5) intégrés, dans laquelle plusieurs piles de feuilles à presser (6) reposent sur des plateaux (13) superposés verticalement de la presse, chaque plateau (13) comprend un chauffage et l'opération de pressage est réalisée par levée des plateaux (13) au moyen d'une table de presse (11, 12) jusqu'à ce que les plateaux soient appliqués les uns contre les autres sous pression, dans laquelle est disposée au-dessus du plateau (13) supérieur une plaque chauffante (13a) qui est déplaçable verticalement et fait fonction de butée mobile pour le mouvement de levée de la presse,
**caractérisée par le fait**
**que** les plateaux (13) situés au-dessus de la table de presse (11, 12) sont munis chacun d'un certain équilibrage de poids (14, 14a) en étant reliés à un élément de levée (14, 14a) particulier pour produire un équilibrage de poids individuel et que lesdits éléments de levée (14, 14a) sont reliés chacun par une unité de réglage (24) particulière à une source d'agent de pression (25) de telle manière que les éléments de levée (14, 14a) reliés aux plateaux (13) inférieurs effectuent des mouvements de levée plus grands que les éléments de levée (14, 14a) reliés aux plateaux (13) supérieurs.

2. Presse à plateaux multiples selon la revendication 1,
**caractérisée par le fait**
**que** la plaque chauffante (13) coopère avec un capteur de pression ou de course (15) pour la commande de l'opération de pressage.

3. Presse à plateaux multiples selon la revendication 1,
**caractérisée par le fait**
**que** la plaque chauffante (13) est reliée à un élément de levée (14, 14a) pour produire un certain équilibrage de poids.

4. Presse à plateaux multiples selon la revendication 3,
**caractérisée par le fait**
**que** l'élément de levée (14, 14a) est relié à une source d'agent de pression (25) par une unité de réglage (24).

5. Presse à plateaux multiples selon la revendication 1,
**caractérisée par le fait**
**que** la plaque chauffante (13) présente essentiellement la même structure que les plateaux (13) situés au-dessous.

6. Procédé de pressage de cartes stratifiées en matière plastique telles que cartes bancaires, cartes de crédit et analogues, en particulier de cartes sans contact avec des composants électroniques intégrés, dans lequel plusieurs piles de feuilles à presser sont posées sur des plateaux ou étages (13) superposés verticalement d'une presse, chaque plateau est chauffé et l'opération de pressage est réalisée par levée des plateaux au moyen d'une table de presse (11, 12) jusqu'à ce qu'ils soient appliqués les uns contre les autres sous pression, dans lequel l'opération de pressage est réalisée en plusieurs étapes et les feuilles de matière plastique sont chauffées d'abord presque sans force de compression jusqu'à atteinte d'un état thermoplastique et la pression est augmentée ensuite seulement jusqu'à la pression maximum,
**caractérisé par le fait**
**que** les plateaux (13) situés au-dessus de la table de presse (11, 12) sont munis chacun d'un certain équilibrage de poids et que l'équilibrage de poids est réalisé par des éléments de levée (14, 14a) individuels qui effectuent des mouvements de levée plus grands aux plateaux inférieurs qu'aux plateaux supérieurs.

7. Procédé selon la revendication 6,
**caractérisé par le fait**
**que** la pression de compression augmente d'abord avec un gradient de pression faible, ensuite avec un gradient de pression plus élevé.

8. Procédé selon la revendication 6,
**caractérisé par le fait**
**que** l'augmentation de pression après atteinte de l'état thermoplastique, presse fermée, est commandée par un dispositif de réglage.

9. Procédé selon la revendication 6,
**caractérisé par le fait**
**que** les plateaux (13) sont reliés chacun à un élément de levée (14) particulier et que cet élément de levée (14) lève son plateau (13) avant que les plateaux venant de plus bas ne le heurtent, de sorte que le choc est amorti.
